# EUROPÄISCHE PATENTSCHRIFT

(11) **EP 2 359 924 B1**
(45) Veröffentlichungstag und Bekanntmachung des Hinweises auf die Patenterteilung: **02.11.2016**
(21) Anmeldenummer: 11075003.1
(22) Anmeldetag: 07.01.2011
(51) Int. Cl.: B01D 53/14, B01D 53/18, G01F 23/02, G01P 13/00, G01N 1/22

(54) **Vorrichtung zur Absorption von umweltgefährdenden Gasen**
Device for absorption of gases harmful to the environment
Dispositif d'absorption de gaz polluants

(30) Priorität: 11.02.2010 DE 102010008142
(43) Veröffentlichungstag der Anmeldung: 24.08.2011
(73) Patentinhaber: Salzgitter Mannesmann Forschung GmbH, 47259 Duisburg (DE)
(72) Erfinder: Hörstemeier, Michaela, 40489 Düsseldorf (DE); Noy, Ulrich, 45475 Mülheim (DE)
(74) Vertreter: Meissner, Peter E.

(56) Entgegenhaltungen:
- AT-U1- 1 224
- DE-U1-202004 005 627

## Beschreibung

Die Erfindung betrifft eine Vorrichtung zur Absorption von umweltgefährdenden Gasen gemäß dem Oberbegriff des Patentanspruches 1.

Vorrichtungen zur Absorption von Gasen werden beispielsweise bei Korrosionstests zur wasserstoffinduzierten Rissbildung an Stahlwerkstoffen nach dem NACE Standard TM 0284-2003 verwendet, bei denen mittels H₂S-Beaufschlagung die Korrosionsprüfung in Prüfgefäßen durchgeführt wird.

Die wasserstoffinduzierte Rissbildung an Stahlwerkstoffen stellt ein ernstes Problem insbesondere für Rohrleitungen dar, die für den Transport von Schwefelwasserstoff enthaltendem Öl oder Gas ausgelegt werden sollen.

Bei dem in der Fachwelt allgemein anerkannten Testverfahren wird die Prüfung auf wasserstoffinduzierte Rissbildung nach der Spezifikation des NACE Standards in Prüfgefäßen mit einer Prüflösung, bestehend aus einer mit H₂S gesättigten Lösung aus NaCl und CH₃COOH, durchgeführt.

Die Prüfanforderungen für den in die Prüflösung eingetauchten Prüfling sehen vor, dass ein bestimmtes Risslängenverhältnis nach 96 Stunden Prüfdauer nicht überschritten werden darf.

Allgemein werden diese von den Kunden geforderten Freigabeprüfungen produktionsbegleitend durchgeführt. Die bei der Prüfung in den Prüfgefäßen anfallenden Überschussmengen an H₂S und H₂S-haltigen Gasgemischen müssen dabei zur Einhaltung zulässiger Expositionswerte für das Prüfpersonal im Prüfraum vollständig und sicher entsorgt werden.

Aus dem DE 20 2004 005 627 U1 ist eine Vorrichtung zur Absorption von umweltgefährdenden Gasen bekannt, bestehend aus einer Pumpe mit einer Absaugleitung zur Absaugung der Gase und einer Zuführung zu einer die Gase absorbierenden Substanz. Dabei ist die Absaugleitung nur an ein Prüfgefäß angezogen. Außerdem ist eine Anzeigeeinheit zur visuellen Kontrolle der Effizienz der Abführung des Gases mit der Leitung verbunden.

Ferner ist aus der DE 27 26 942 A1 ein Beispiel für die Messung bzw. Anzeige eines Gasstromes mittels eines mit Flüssigkeit gefüllten Gefäßes und der darin erzeugten Gasblasen bekannt.

Aus der DD 240 144 A1 ist ein Verfahren zur absorptiven Gasbehandlung bei der Erdölverarbeitung bekannt, bei dem der Absorptionsprozess in mehreren Sektionen, in Einbauten mit unterschiedlicher Gestaltung und Wirkungsweise abläuft.

Weiterhin ist es allgemein bekannt, die gesamte belastete Raumluft über ein Abluftsystem abzuführen und über Nass- oder Aktivkohlefilter zu leiten, um das enthaltene schadstoffhaltige Gas zu absorbieren.

Die bekannten Verfahren bzw. Vorrichtungen zur Gasabsorption sind sehr aufwändig und teuer und damit im Rahmen einer produktionsbegleitenden Korrosionsprüfung unwirtschaftlich.
Zudem ist es nicht möglich, die aktuelle Effizienz der Abführung der H₂S-haltigen Abgase auf einfache Weise zu kontrollieren und eine mögliche Rückströmung von H₂S in die Raumluft und damit eine Überschreitung der Expositionswerte sicher zu erkennen.

Aufgabe der Erfindung ist es deshalb, eine Vorrichtung zur Absorption von umweltgefährdenden Gasen, insbesondere von bei Korrosionsprüfungen anfallenden Überschussmengen an H₂S und H₂S-haltigen Gasgemischen anzugeben, welches diese sicher und kostengünstig absorbiert und eine permanente Kontrolle der Effizienz der Abführung der H₂S-haltigen Abgase zulässt.

Erfindungsgemäß wird diese Aufgabe dadurch gelöst, dass eine Vorrichtung, bestehend aus einer Pumpe mit einer Absaugleitung zur Absaugung der Gase und einer Zuführung zu einer die abgesaugten Gase absorbierenden Substanz verwendet wird, bei der die Absaugleitung nur an den die Überschussmengen produzierenden Prüfgefäßen angeschlossen ist und an der Absaugleitung mindestens eine Anzeigeeinheit zur visuellen Kontrolle der Effizienz der Abführung der H₂S-haltigen Abgase angeschlossen ist und dass die Anzeigeeinheit aus einem aus durchsichtigem Material, wie beispielsweise Klarglas und aus mehreren Kammern aufgebauten Gefäß besteht, wobei die Kammern nur zum Teil mit Flüssigkeit gefüllt sind und zum Gas- bzw. Flüssigkeitsaustausch miteinander kommunizierend verbunden sind und mit weiteren Gasströmen, wie z. B. N₂ oder Luft beaufschlagbar sind und die Anzeige der Effizienz der Abführung der H₂S-haltigen Abgase durch visuell erkennbare Blasenbildung in den jeweiligen Kammern in denen die Flüssigkeit vom Gas durchströmt wird, oder anhand des jeweiligen Flüssigkeitspegels in den Kammern erfolgt.

Durch einen direkten Anschluss der Absaugung an die Prüfgefäße kann einerseits durch die höhere Konzentration der H₂S-haltigen Gase die Effizienz deren Abführung im Vergleich zur Raumluftabsaugung deutlich gesteigert werden. Zusätzlich kann die Effizienz über die an die

Absaugleitung angeschlossene Anzeigeeinheit permanent visuell kontrolliert und bei Bedarf eingegriffen werden. Die Absorption der Gase kann z. B. über einen mit Natronlauge (NaOH) gefüllten Behälter erfolgen oder bei CO₂-haltigen Abgasen z. B. über granuliertes Raseneisenerz.

Im Einzelnen besteht die Anzeigeeinheit aus einem ersten Gefäß mit 3 übereinander angeordneten Kammern, die jeweils zu einem Teil mit Flüssigkeit gefüllt sind, wobei die untere Kammer oberhalb des Flüssigkeitsspiegels mit der Absaugleitung verbunden ist und die Flüssigkeit der oberen Kammer mit einem zusätzlichen Gasstrom beaufschlagbar ist und die Kammern für einen Gas- und Flüssigkeitsaustausch miteinander verbunden sind, wobei die obere Kammer für einen Gasaustausch oberhalb des Flüssigkeitsspiegels mit einer ersten Kammer eines aus zwei Kammern bestehenden zweiten zum Teil mit Flüssigkeit gefüllten Gefäßes einer weiteren Anzeigeeinheit in Verbindung steht, und die Kammern des Gefäßes der zweiten Anzeigeeinheit zum Gas- und Flüssigkeitsaustausch ebenfalls miteinander verbunden sind und die zweite Kammer der zweiten Anzeigeeinheit oberhalb des Flüssigkeitsspiegels über eine Bypassleitung mit der Umgebungsluft außerhalb des Prüfraumes in Verbindung steht.

Die in den Kammern befindliche Flüssigkeit zur visuellen Anzeige der Absorptionseffizienz des H₂S Gases weist vorteilhaft nicht schäumende Eigenschaften auf, wie z. B. Silikonöl, um die in den einzelnen Kammern beim Durchströmen entstehenden Gasblasenbildung deutlich zu erkennen und dem jeweiligen Absorptionszustand zuordnen zu können.

Das Arbeitsprinzip der erfindungsgemäßen Vorrichtung basiert auf einem Angebot an zu absorbierenden Überschussmengen an H₂S, die vollständig entsorgt werden sollen und einem zusätzlichen geringen Angebot an N₂ zur Steuerung der Effizienz der Abführung der H₂S-haltigen Abgase, das durch das teilweise mit Flüssigkeit gefüllte Mehrkammersystem der Gefäße strömt und durch Blasenbildung in den verschiedenen Kammern auf einfache Weise eine visuelle Beurteilung der Effizienz der Abführung ermöglicht. Durch das unterschiedliche Auftreten von Gasblasen in den einzelnen Kammern wird angezeigt, ob die Pumpenleistung und der N₂-Zustrom für eine optimale Absorption ausreichend, zu stark oder zu schwach eingestellt ist. Die Effizienz wird außerdem durch die jeweiligen aktuellen Pegelstände der Flüssigkeit in den Kammern angezeigt.

Die Investitionskosten für die erfindungsgemäße Vorrichtung sind sehr gering und die Vorrichtung bietet die Möglichkeit auf einfache Weise die Effizienz der Abführung der H₂S-haltigen Abgase visuell zu kontrollieren und bei einer zu geringen Effizienz direkt einzugreifen. Die Vorrichtung zur visuellen Absorptionskontrolle ist nicht nur bei Neueinrichtungen von Absorptionsanlagen einfach zu realisieren, sondern kann auch problemlos bei bereits vorhandenen Anlagen nachgerüstet werden.
Auch wenn die Erfindung für die Korrosionsprüfung mit H₂S-Beaufschlagung von Prüfkörpern beschrieben wird, ist sie jedoch grundsätzlich für alle denkbaren Fälle anwendbar, bei denen ein für die Umwelt schädliches Gas oder Gasgemisch am Entstehungsort abgesaugt und anschließend absorbiert und die Effizienz der Abführung der Abgase visuell angezeigt werden soll.

Weitere Merkmale, Vorteile und Einzelheiten der Erfindung ergeben sich aus der nachfolgenden Beschreibung der dargestellten Ausführungsbeispiele.

Es zeigen:
- **Figur 1**: Schematische Darstellung der H₂S Absorption im Idealzustand,
- **Figur 2**: wie Figur 1, jedoch mit zu schwacher Pumpenleistung,
- **Figur 3**: wie Figur 1, jedoch mit zu starker Pumpenleistung.

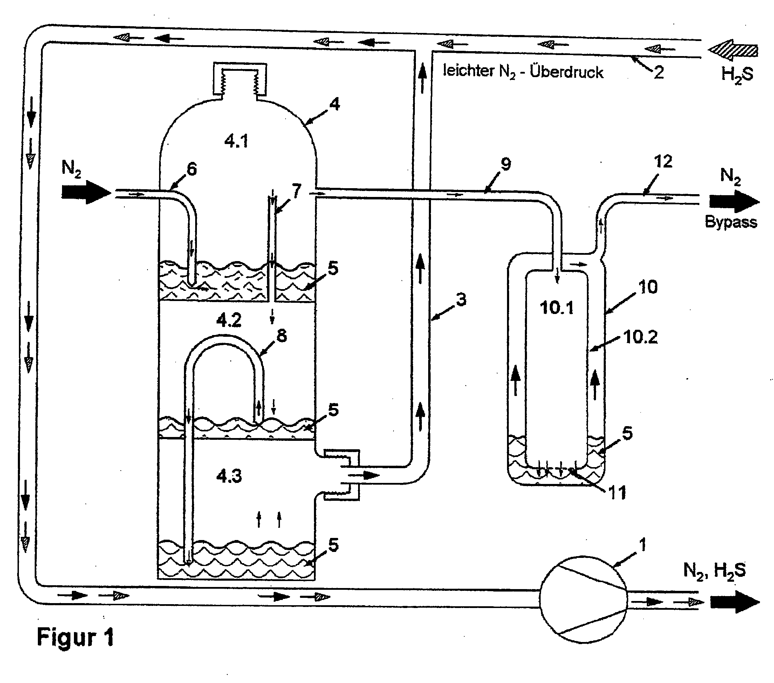

- Die **Figuren 1** - **3**: zeigen schematisch die möglichen Arbeitszustände der erfindungsgemäßen H₂S-Absorptionsvorrichtung mit visueller Kontrolle der Absorptionseffizienz.

In **Figur 1** ist die erfindungsgemäße H₂S-Absorptionsvorrichtung schematisch im Idealzustand dargestellt.

Die Vorrichtung selbst besteht im Wesentlichen aus einer Pumpe 1 zur Absaugung der bei der Korrosionsprüfüng entstandenen Überschussmengen an H₂S-haltigen Gasen direkt aus den hier nicht dargestellten Prüfgefäßen, die anschließend über eine die einzelnen Absaugströme bündelnden Absaugleitung 2 in einem hier ebenfalls nicht dargestellten, mit Natronlauge (NaOH) gefüllten Behälter absorbiert werden.

An der Absaugleitung 2 ist über eine damit verbundene Anschlussleitung 3 eine Anzeigeeinheit 4 mit einem aus drei Kammern 4.1, 4.2, 4.3 bestehenden Gefäß zur Visualisierung der Effizienz der Absaugung angeschlossen, dessen obere Kammer 4.1 über eine weitere Rohrleitung 9 mit einem weiteren, aus zwei Kammern 10.1, 10.2 bestehenden und zum Teil mit Anzeigeflüssigkeit 5 gefüllten Gefäß als Anzeigeeinheit 10 verbunden ist.

Die übereinander angeordneten Kammern 4.1, 4.2 und 4.3 der Anzeigeeinheit 4 sind jeweils zu einem Teil mit der Anzeigeflüssigkeit 5, wie z. B. Silikonöl, zur Sichtbarmachung der Gasblasen gefüllt.

Die untere Kammer 4.3 ist oberhalb des Flüssigkeitsspiegels über die Anschlussleitung 3 und dem Ventil mit der Absaugleitung 2 verbunden. Die Flüssigkeit 5 der oberen Kammer 4.1 wird durch eine Zuleitung 6 mit einem zusätzlichen Gasstrom, wie z. B. N₂, zur Steuerung der Absorption beaufschlagt, wobei die Zuleitung 6 in die Anzeigeflüssigkeit 5 eintaucht. Die Kammern 4.1, 4.2 und 4.3 sind für einen Gas- bzw. Gas- und Flüssigkeitsaustausch miteinander verbunden um die Gasblasenbildung und den aktuellen Pegelstand der Anzeigenflüssigkeit 5 in den verschiedenen Kammern anzeigen zu können.

Im vorliegenden Fall beträgt der N₂-Druck ca. 1-1,5 bar bei einem H₂S-Druck aus den Testgefäßen von ca. 1 bar.
Für den Gasaustausch zwischen der oberen Kammer 4.1 und der mittleren Kammer 4.2 sind diese durch ein über den Flüssigkeitspegel der Kammer 4.1 herausragendes Stehrohr 7 verbunden. Der Flüssigkeitsaustausch zwischen der mittleren Kammer 4.2 und der unteren Kammer 4.3 wird durch eine entsprechend geformte Rohrleitung 8 ermöglicht und nur über den anstehenden Gasdruck gesteuert.

Die obere Kammer 4.1 der Anzeigeeinheit 4 ist für einen weiteren Gasaustausch durch eine Rohrleitung 9 mit der Anzeigeeinheit 10 oberhalb des Flüssigkeitsspiegels der ersten Kammer 10.1 verbunden.
Das Gefäß der Anzeigeeinheit 10 ist doppelwandig ausgeführt, wobei die beiden Kammern 10.1 und 10.2 für einen Gas- und Flüssigkeitsaustausch ebenfalls miteinander verbunden sind. Die erste Kammer 10.1 bildet den inneren Raum des Gefäßes und wird von der zweiten Kammer 10.2 umschlossen. Im Fußteil der Kammer 10.1 ist die Wand zur Kammer 10.2 mit Öffnungen 11 versehen, so dass Gas und Flüssigkeit ausgetauscht werden können. Des Weiteren ist die zweite Kammer 10.2 oberhalb des Flüssigkeitsspiegels für den Störfall über eine Bypassleitung 12 mit der Umgebungsluft verbunden, durch die das überschüssige H₂S-Gas bei nicht ausreichender Absorption außerhalb des Prüfraums abgeführt werden kann.

In dem hier dargestellten Idealzustand für die Absorption strömt das der Kammer 4.1 über die Zuleitung 6 zugeführte N₂ durch das Stehrohr 7 in die Kammer 4.2 und von dort in die Kammer 4.3 wo es über die Anschlussleitung 3 der Absaugleitung 2 zugeführt wird. Die Fließrichtung von H₂S und N₂ in den Leitungen und Kammern der Vorrichtung ist durch Pfeile gekennzeichnet.

Im vorliegenden Fall wird die zu absorbierende Überschussmenge an H₂S über die Pumpe 1 von den Prüfgefäßen abgesaugt und mit dem gleichzeitig unter leichtem Überdruck anstehenden N₂ vollständig der Natronlauge des Absorptionsbehälters zugeführt, so dass eine optimale Absorption des H₂S-Gases vorliegt. Dieser Idealzustand der Absorption lässt sich u. a. visuell daran erkennen, dass in den Kammern 4.1 und 4.3 und in der Kammer 10.2 Gasbläschen perlen.

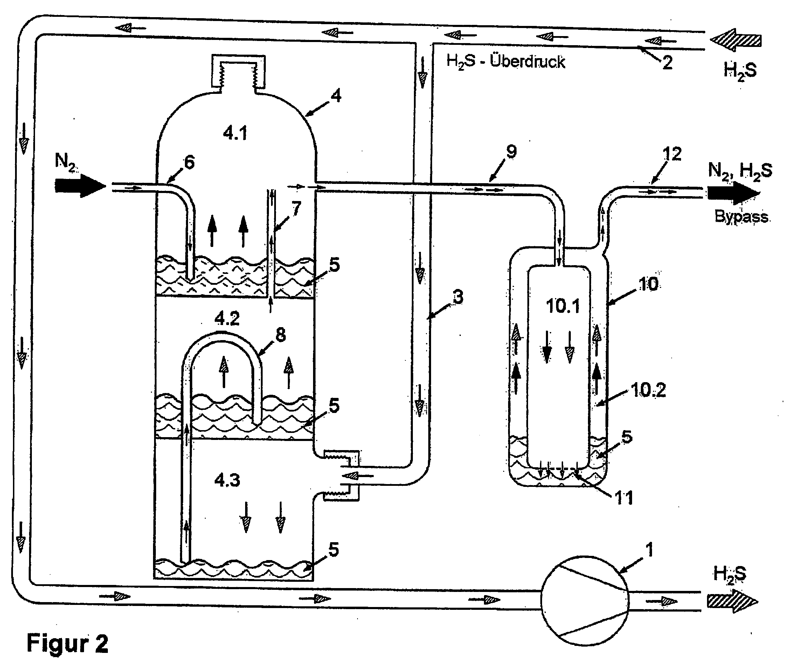

**Figur 2** zeigt den Anzeigenzustand einer zu schwachen Absaugleistung der Pumpe 1 wenn diese nicht ausreicht, um die Überschussmengen an H₂S vollständig abzupumpen. Gleiche Bezugszeichen entsprechen gleichen Vorrichtungsmerkmalen.

Hierdurch entsteht ein H₂S-Stau an dem Knoten der Anschlussleitung 3 und der Absaugleitung 2. In diesem Fall drückt sich aufgrund des H₂S-Überdrucks das H₂S durch die Anschlussleitung 3 in die Kammern 4.3, 4.2 und 4.1 der Anzeigeeinheit 4 und anschließend in die Rohrleitung 9 und die Kammern 10.1 und 10.2 der Anzeigeeinheit 10 und schließlich in die Bypassleitung 12, von wo aus das überschüssige H₂S-Gas aus dem Prüfraum abgeführt wird.

Dieser kritische Zustand lässt sich dadurch erkennen, dass aus der Absaugleitung 2 H₂S-Gas in die Kammer 4.3 der Anzeigeeinheit 4 gedrückt wird, wodurch der Flüssigkeitspegel in der Kammer 4.2 ansteigt und dort Gasbläschen aus H₂S-Gas aufsteigen. Das H₂S-Gas gelangt dann durch das Stehrohr 7 in die Kammer 4.1 und von dort aus gemeinsam mit dem in die Kammer 4.1 zugeführten N₂ durch die Rohrleitung 9 in die Kammer 10.1 der Anzeigeeinheit 10. Durch die Öffnungen 11 zwischen den Kammern 10.1 und 10.2 gelangt nun das Gasgemisch aus N₂ und H₂S in die äußere Kammer 10.2 der Anzeigeeinheit 10 und von dort in die Bypassleitung 12.

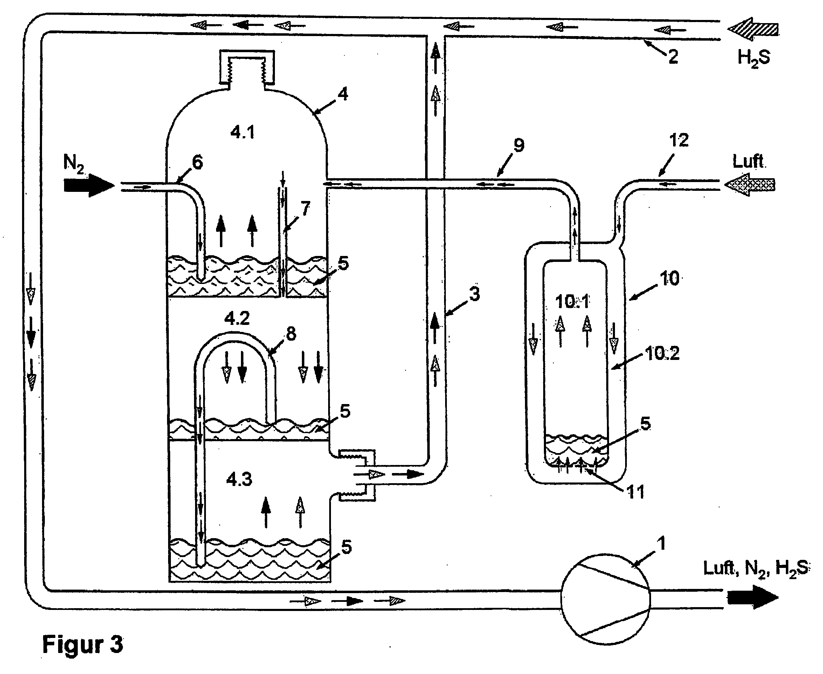

**Figur 3** zeigt den Absorptionszustand, wenn die Pumpenleistung zu stark ist. In diesem Fall reichen die Überdrücke an H₂S und N₂ nicht aus, so dass Umgebungsluft aus der Bypassleitung 12 angesaugt und dem Absorptionsbehälter zugeführt wird. Erkennbar wird dieser Zustand durch vorhandene Anzeigeflüssigkeit 5 in der Kammer 10.1, der Anzeigeeinheit 10, die aus der Kammer 10.2 herausgedrückt wurde sowie durch hierin aufsteigende Gasbläschen.

## Patentansprüche

1. Vorrichtung zur Absorption von umweltgefährdenden, bei Korrosionsprüfungen in Prüfgefäßen anfallenden Überschussmengen an H₂S-Gasen und H₂S-haltigen Gasgemischen, bestehend aus einer Pumpe (1) mit einer Absaugleitung (2) zur Absaugung der Gase und einer Zuführung zu einer die abgesaugten Gase absorbierenden Substanz und mindestens einer Anzeigeeinheit (4, 10) zur visuellen Kontrolle der Effizienz der Abführung der H2S-haltigen Abgase, wobei die Absaugleitung (2) nur an den die
Überscussmengen produzierenden Prüfgefäßen angeschlossen ist und an der Absaugleitung (2) die mindestens eine Anzeigeeinheit (4, 10) zur visuellen Kontrolle der Effizienz der Abführung der H₂S-haltigen Abgase angeschlossen ist,
**dadurch gekennzeichnet,**
**dass** die Anzeigeeinheit (4, 10) aus mindestens einem aus durchsichtigem Material und aus mehreren Kammern (4.1, 4.2, 4.4, 10.1, 10.3) aufgebautem Gefäß besteht, und die Kammern teilweise mit einer Anzeigeflüssigkeit (5) gefüllt sind und zum Gas- bzw. Flüssigkeitsaustausch miteinander kommunizierend verbunden sind und mit weiteren Gasströmen beaufschlagbar sind und die Anzeige durch Veränderung des Flüssigkeitsstandes und/oder durch visuell erkennbare Blasenbildung in den jeweiligen Kammern (4.1, 4.2, 4.3, 10.1, 10.2), in denen die Flüssigkeit (5) vom Gas durchströmt wird, erfolgt, wobei
die Kammern (4.1, 4.2, 4.3) der Anzeigeeinheit (4) übereinander angeordnet sind und die untere Kammer (4.3) oberhalb des Flüssigkeitsspiegels mit der Absaugleitung (2) verbunden ist und die Flüssigkeit (5) der oberen Kammer (4.1) über eine Zuleitung (6) mit einem zusätzlichen Gasstrom beaufschlagbar ist und die Kammern (4.1, 4.2, 4.3) für einen Gasaustausch miteinander verbunden sind, wobei die obere Kammer (4.1) für einen Gasaustausch oberhalb des Flüssigkeitsspiegels mit der ersten Kammer (10.1) einer aus einem zweiten Gefäß mit zwei Kammern (10.1, 10.2) bestehenden zweiten Anzeigeeinheit (10) in Verbindung steht, wobei die Kammern (10.1, 10.2) der zweiten Anzeigeeinheit (10) zum Teil mit Anzeigenflüssigkeit (5) gefüllt und zum Gas- und Flüssigkeitsaustausch miteinander verbunden sind und die zweite Kammer (10.2) der zweiten Anzeigeeinheit (10) oberhalb des Flüssigkeitsspiegels über eine Bypassleitung (12) mit der Umgebungsluft in Verbindung steht.

2. Vorrichtung nach Anspruch 1
**dadurch gekennzeichnet,**
**dass** das Gas des zusätzlichen Gasstroms ein inertes Gas ist.

3. Vorrichtung nach Anspruch 2
**dadurch gekennzeichnet,**
**dass** das Gas Stickstoff (N₂) ist.

4. Vorrichtung nach einem der Ansprüche 1 - 3
**dadurch gekennzeichnet,**
**dass** die Flüssigkeit nicht schäumende Eigenschaften aufweist.

5. Vorrichtung nach Anspruch 4
**dadurch gekennzeichnet,**
**dass** die Flüssigkeit Silikonöl ist.

6. Vorrichtung nach einem der Ansprüche 1 - 5
**dadurch gekennzeichnet,**
**dass** die das überschüssige Gas absorbierende Substanz eine Flüssigkeit ist.

7. Vorrichtung nach Anspruch 6
**dadurch gekennzeichnet,**
**dass** die Flüssigkeit eine Lauge ist.

8. Vorrichtung nach Anspruch 7
**dadurch gekennzeichnet,**
**dass** die Lauge Natronlauge (NaOH) ist.

9. Vorrichtung nach Anspruch 1 - 6
**dadurch gekennzeichnet,**
**dass** die das überschüssige Gas absorbierende Substanz ein Granulat ist.

10. Vorrichtung nach Anspruch 9
**dadurch gekennzeichnet,**
**dass** das Granulat Raseneisenerz ist

## Claims

1. A device for absorbing environmentally harmful excess amounts of H₂S gases and H₂S-containing gas mixtures which occur during corrosion testing in test vessels, which consists of a pump (1) with an exhaust line (2) for exhausting the gases and a supply means for a substance which absorbs the exhausted gases and at least one indicator unit (4, 10) for visually monitoring the efficiency of the removal of the H₂S-containing exhaust gases,
wherein the exhaust line (2) is connected only to the test vessels producing the excess amounts and the at least one indicator unit (4, 10) for visually monitoring the efficiency of the removal of the H₂S-containing exhaust gases is connected to the exhaust line (2),
**characterised in that**
the indicator unit (4, 10) consists of at least one vessel constructed from transparent material and a plurality of chambers (4.1, 4.2, 4.4, 10.1, 10.3), and the chambers are partly filled with an indicator liquid (5) and communicate with each other for gas or liquid exchange and can be acted upon by further gas streams and the indication takes place by changing the level of liquid and/or by visually recognisable bubbling in the respective chambers (4.1, 4.2, 4.3, 10.1, 10.2) in which the gas flows through the liquid (5),
the chambers (4.1, 4.2, 4.3) of the indicator unit (4) being arranged one above another and the lower chamber (4.3) being connected to the exhaust line (2) above the liquid level and the liquid (5) of the upper chamber (4.1) being able to be acted upon with an additional gas stream via a feed line (6) and the chambers (4.1, 4.2, 4.3) being connected together for gas exchange, the upper chamber (4.1) for gas exchange above the liquid level being connected to the first chamber (10.1) of a second indicator unit (10) consisting of a second vessel with two chambers (10.1, 10.2), the chambers (10.1,10.2) of the second indicator unit (10) being partly filled with indicator liquid (5) and being connected together for gas and liquid exchange and the second chamber (10.2) of the second indicator unit (10) above the liquid level being connected to the ambient air via a bypass line (12).

2. A device according to Claim 1, **characterised in that** the gas of the additional gas stream is an inert gas.

3. A device according to Claim 2, **characterised in that** the gas is nitrogen (N₂).

4. A device according to one of Claims 1 - 3, **characterised in that** the liquid has non-foaming properties.

5. A device according to Claim 4, **characterised in that** the liquid is silicone oil.

6. A device according to one of Claims 1 - 5, **characterised in that** the substance which absorbs the excess gas is a liquid.

7. A device according to Claim 6, **characterised in that** the liquid is a lye.

8. A device according to Claim 7, **characterised in that** the lye is sodium hydroxide solution (NaOH).

9. A device according to Claims 1 - 6, **characterised in that** the substance which absorbs the excess gas is a granulate.

10. A device according to Claim 9, **characterised in that** the granulate is bog iron ore.

## Revendications

1. Dispositif destiné à l'absorption de quantités excédentaires de gaz H₂S et de mélanges de gaz à teneur en H₂S, dangereuses pour l'environnement et étant générées lors des contrôles de corrosion réalisés dans des récipients d'essai, comprenant une pompe (1) avec une conduite d'aspiration (2), destinée à l'évacuation des gaz par aspiration, et une conduite d'alimentation vers une substance absorbant les gaz aspirés, ainsi qu'au moins une unité d'affichage (4, 10) destinée au contrôle visuel de l'efficacité de l'évacuation des gaz d'échappement à teneur en H₂S,
dans lequel la conduite d'aspiration (2) n'est raccordée qu'aux récipients d'essai produisant les quantités excédentaires, l'unité d'affichage (4, 10) au moins au nombre de un, destinée au contrôle visuel de l'efficacité de l'évacuation des gaz d'échappement à teneur en H₂S, est raccordée à la conduite d'aspiration (2),
**caractérisé en ce que**
l'unité d'affichage (4, 10) est composée d'au moins un récipient fabriqué en un matériau transparent et dont la structure comprend plusieurs chambres (4.1, 4.2, 4.4, 10.1, 10.3), et les chambres sont partiellement remplies d'un liquide d'affichage (5) et sont reliées les unes aux autres de manière communicante avec l'échange de gaz, respectivement l'échange de liquide, et qui peuvent être exposées à d'autres flux gazeux, et l'affichage a lieu par la modification de l'état du liquide et/ou par la formation de bulles, pouvant être observées visuellement, dans les chambres respectives (4.1, 4.2, 4.3, 10.1, 10.2) dans lesquelles le liquide (5) est traversé par le gaz,
dans lequel les chambres (4.1, 4.2, 4.3) de l'unité d'affichage (4) sont disposées l'une au-dessus de l'autre et la chambre inférieure (4.3) est reliée à la conduite d'aspiration (2) au-dessus du niveau du liquide, et le liquide (5) de la chambre supérieure (4.1) peut être exposé à un flux de gaz supplémentaire par l'intermédiaire d'une conduite d'amenée (6), et les chambres (4.1, 4.2, 4.3) sont reliées les unes aux autres pour un échange gazeux,
dans lequel la chambre supérieure (4.1) est en liaison, pour un échange gazeux, au-dessus du niveau du liquide avec la première chambre (10.1) d'une deuxième unité d'affichage (10) composée d'un deuxième récipient pourvu de deux chambres (10.1, 10.2),
dans lequel les chambres (10.1, 10.2) de la deuxième unité d'affichage (10) sont en partie remplies de liquide d'affichage (5) et sont reliées les unes aux autres avec l'échange de gaz et de liquide, et la deuxième chambre (10.2) de la deuxième unité d'affichage (10) est en liaison au-dessus du niveau de liquide avec l'air environnant par l'intermédiaire d'une conduite de dérivation (12).

2. Dispositif selon la revendication 1 **caractérisé en ce que** le gaz du flux de gaz supplémentaire est un gaz inerte.

3. Dispositif selon la revendication 2 **caractérisé en ce que** le gaz en question est de l'azote (N₂).

4. Dispositif selon l'une des revendications 1 à 3 **caractérisé en ce que** le liquide présente des propriétés non moussantes.

5. Dispositif selon la revendication 4 **caractérisé en ce que** le liquide est de l'huile de silicone.

6. Dispositif selon l'une des revendications 1 à 5 **caractérisé en ce que** la substance absorbant le gaz excédentaire est un liquide.

7. Dispositif selon la revendication 6 **caractérisé en ce que** le liquide est une lessive.

8. Dispositif selon la revendication 7 **caractérisé en ce que** la lessive est une solution d'hydroxyde de sodium (NaOH).

9. Dispositif selon la revendication 1 à 6 **caractérisé en ce que** la substance absorbant le gaz excédentaire est un granulat.

10. Dispositif selon la revendication 9 **caractérisé en ce que** le granulat est du fer des marais.
